# EUROPEAN PATENT APPLICATION

(11) **EP 3 392 615 A1**
(43) Date of publication of application: **24.10.2018**
(21) Application number: 18157743.8
(22) Date of filing: 20.02.2018
(51) Int. Cl.: G01C 21/20

(54) **SEAMLESS INDOOR-OUTDOOR MAPPING AND NAVIGATION INSIDE VEHICLES, WITH NAVIGATION TO AN IN-VEHICLE LOCATION IN RELATION TO AN EXTERNAL OBJECT**

(30) Priority: 18.04.2017 EP 17166960
(71) Applicant: Heidelberg mobil international GmbH, 69120 Heidelberg (DE)
(72) Inventor: JÖST, Matthias, 69120 Heidelberg (DE)
(74) Representative: Zahn, Matthias

(57) **Abstract**

A computer-implemented method (400) to operate a mobile device (110) on a vehicle (100) provides navigation from an initial in-vehicle location (311) to a target location (312) in predetermined relation to an object (185). The object (185) is located outside the vehicle (100). The device receives (410) vehicle location data (135-L) that represent a geographical location (Xveh, Yveh) of the vehicle (100) from a vehicle location system (130) that is mounted on the vehicle (100). The device (110) calculates (420) target location data (112) by processing the vehicle location data (135-L) and location data of the object (185, Xobj, Yobj). The device (110) determines (430) initial in-vehicle location data (111-L) and calculates (440) an in-vehicle navigation path (318, 218) from the initial in-vehicle location (311) to the target location (312). The device (110) then provides (450) a visual representation (215) of the navigation path (218) by a map (215) on a display component (122).

## Description

### Technical Field

The description generally relates to devices, and more particularly relates to mobile devices that are used on board of vehicles to provide navigation within the vehicle, but under consideration of objects that are external to the vehicle.

### Background

Many mobile devices (as for example, "smartphones" or "tablets") have built-in sensors to identify the geographical location with respect to a global reference (usually, geographical longitude and geographical latitude). The built-in sensors comprise radio circuits that receive reference signals from reference transmitters, such as satellites, or beacons. The mobile devices store data that represents the geographical location as device location data. The mobile device uses the device location data to provide navigation to its users. For example, the mobile device shows a geographical map that represents the device location by a symbol.

However, the built-in sensors do sometimes not receive the reference signals, due to signal attenuation or other reasons. Such situations frequently occur if the mobile device is located inside buildings or inside relatively large vehicles (e.g., ships, or trains).

As the vehicles move (on a regular basis), the mobile devices move together with the vehicle. Mobile devices in use by vehicle passengers can obtain the device location data if the passengers walk to an on-board location where the reference signals can be received. For example, in case of a ship, the passenger would have to go to the upper deck. However, visiting such an on-board location is time-consuming and not always possible (environmental conditions, dangers to the passengers, safety/security reasons etc.).

As a consequence, the lack of accurate device location data makes it difficult to provide maps that allow zooming between maps that are internal maps (i.e. of the vehicle) and maps that are external maps (i.e. of the surrounding environment). The user is likely to see or notice transitions when navigating between the maps. For example, the user might have to switch between internal maps and external maps manually. This is not desired.

There is a need to increase the data accuracy even in situations with attenuated reference signals so that the user experience with the maps can be improved.

US 2011/0251787 A1 by Gupta et al. explain the use of mobile devices on a relatively large transport vehicle such as on a cruise ship. The authors realized that satellite signals may not be reliably received and/or acquired in indoor environments (i.e. of the ship). The mobile device uses a global navigational coordinate system (via satellite) and/or a local navigational coordinate system (an indoor system). It is acknowledged that there are challenges to integrate both systems. There are conditions for selecting the system to use. The ship transmits a signal to the mobile devices, and the signal instructs the mobile devices what system to use: the global system and/or the local system.

### Summary

In embodiments of the present invention, a computer-implemented method to operate a mobile device on a vehicle provides navigation from an initial in-vehicle location of the mobile device to a target location of the mobile device. (In the following, "device" is short for "mobile device"). The target location is a location in a pre-determined relation to an object that is located outside the vehicle. In a receiving step, the device receives vehicle location data that represent a geographical location of the vehicle. The device receives the data from a vehicle location system that is mounted on the vehicle. In a calculating step, the device receives target location data by processing the vehicle location data and location data of the object. In a determining step, the device determines initial in-vehicle location data of the mobile device and calculates an in-vehicle navigation path from the initial in-vehicle location to the target location. Thereby, the device uses the initial in-vehicle location data and the target location data. In a providing step, the device provides a visual representation of the navigation path by a map on a display component of the mobile device.

Optionally, in the receiving step the device can receive vehicle orientation data that represent an orientation of the vehicle. Orientation data is received from the vehicle data system. In the calculating step, the device calculates target orientation data by processing the vehicle orientation data. In the determining step, the device determines initial in-vehicle orientation data of the mobile device. In the calculating step, the device calculates the in-vehicle navigation path by using the initial in-vehicle orientation data and the target orientation data. In the providing step, the device provides the visual representation of the navigation path with a target orientation of the device.

Optionally, the device can receive vehicle location data that is applicable for a point in time in the future. This option is possible because the device receives the location data from the vehicle location system mounted on the vehicle. Unlike the mobile device, the vehicle location system has data that relates to the future, such as data regarding navigation scheduled for the future. This option allows the device to perform the subsequent steps in relation to the future. The navigation path can be provided for the user who reach the target location in a pre-determined relation to the object that will be located (outside the vehicle) at a particular pre-determined location.

Optionally, the device can provide the visual representation of the navigation path, i.e. the map with portions that are based on different coordinate systems. There is an external portion that represents the vehicle by indicating the geographic location of the vehicle, and there is an internal portion that represents the interior of the vehicle inside by indicating the in-vehicle location of the mobile device. Thereby, data for the internal portion is related to at least one point of the vehicle, and data for the external portion is the vehicle location data for the same point of the vehicle.

Optionally, the device can provide the map as a combination of the internal portion and the external portion, with zooming being enabled between the portions. Optionally, the device can interact with a user to receive a zoom factor and - depending on the zoom factor - can render the map with the internal portion or with the external portion. A combination of the external portion and the internal portion can also be rendered. Optionally, the device can provide the external portion with an indication of the object. Optionally, the device can receive the location data of the object (from the vehicle location system) so that for calculating the target location data, the mobile device uses the received location data of the object.

Optionally, the vehicle location data and the object location data is data with applicability to a particular point in time in the future to calculate target location data with applicability to that particular point in time.

In embodiments, a computer program product that, when loaded into a memory of a computer and being executed by at least one processor of the computer, performs the steps of the computer-implemented method. In embodiments, a mobile device with processor, memory and display, has modules that are adapted by computer-instructions to perform the method steps. Optionally, the modules can be adapted by computer-instructions received through a communication module.

Compared to Gupta et al. it may be advantageous that the mobile device does not have to determine a geographical position by its own sensors. As mentioned, the mobile device is adapted to receive vehicle location data through signals from a vehicle location system that is mounted on the vehicle. As a consequence, geographical location data (of the vehicle) is available to the mobile device substantially at any time, and substantially anywhere in the vehicle. Obstacles that attenuate the reference signals are no longer relevant. Vehicle location data is centrally distributed.

Further to the mentioned constraints for the location data accuracy, using mobile devices to provide navigation within the vehicle under consideration of the external objects has further, interrelated constraints, among them the following:
(1) The vehicle is moving (in terms of geography) towards the object or away from the object, usually in a predictable fashion. But occasionally, there are changes on short notice. For example, the object can move as well, or the object can be "replaced" by an alternative object.
(2) The vehicle is moving in relation to the object within a time interval that can be estimated (e.g., based on speed), but the time it takes a passenger to relocate within the ship need to be considered as well.
(3) The calculations to determine a navigation path and calculations to render the path on a map on the device need to be performed within a time interval during that the vehicle does not move significantly so that the geographical relation between the vehicle and the object remains substantially unchanged.
(4) These calculations require input data, such as (i) data sets that represent relocation ways inside the vehicle (stairs, hallways, elevators) and that the mobile device uses to calculate the navigation path, and (ii) data sets that the mobile device needs for rendering maps (i.e. with the navigation path, with a symbol of the object etc.). For both data aspects, changes are to be expected.
(5) Bandwidth limitations can disturb or prevent the communication with mobile devices. There might be situations where many passengers try to use mobile devices to seek the way to the external object, but where limitations actually stop the communication.
(6) The mobile device needs to render maps with portions that are based on different coordinate systems. Maps can have in-vehicle portions that represent the vehicle inside and ex-vehicle portions that represent the environment, optionally with the object outside.

According to aspects of the invention, these and other constraints are addressed. The following provides an overview, to some aspects, interrelated as well.
(a) Advanced knowledge of vehicle movement is available to the computer that provides the location data. Vehicle location data (to the mobile device) can be enhanced by an indication of future vehicle locations and orientations (along a movement path of the vehicle). There is also a data-update aspect: In case that the data regarding future locations has been transmitted, the movement path data can be refreshed should the vehicle actually move elsewhere.
(b) The mobile device renders both portions on the same display by using data for both portions, wherein at least a fraction of the data is common. The data for the internal portion can be related to at least one point of the vehicle, and the data for the external portion can be vehicle location data - for the same point of the vehicle. Data can be combined in this point. This approach further supports to render maps that can zoom between and across both coordinate systems. There is even no need to let the device user switch between systems.
(c) Data can be loaded to the mobile device upfront, in a so-called mobile application (or "app"). Such an approach is applicable for data to determine the navigation path and to render the navigation path. This does not exclude the possibility to react on modifications on short notice. For example, data sets for relocation ways can be updated should a way be blocked (e.g., elevator failure) or re-opened, data sets to render the map can be enhanced by adding or changing (e.g., by modifying a symbol of the object).
(d) There is a real-time aspect: the vehicle location data corresponds to the actual location of the vehicle at the time of transmitting the data by a signal. The delay caused by transmitting the signal, receiving the signal at the mobile device, and decoding the signal by the mobile can be neglected. During that "delay time", the vehicle can move but the change of the location is not relevant in providing navigation to/from the external object.
(e) As the calculation of an in-vehicle navigation path requires input data that can change over time, obtaining such data is optimized to the conditions of mobile devices in operation on vehicles. The input data is the location data of the object (a location external to the vehicle) and the location data of the mobile device (a location inside the vehicle). Both input data can be obtained by the mobile device at any time (by receiving the mentioned signal and by operating in-vehicle location sensors of the device).
(f) The signal with the vehicle location data (data that is transmitted to the mobile device in addition, such as location date of the object) is relatively bandwidth saving. A relatively high number of passengers who use their mobile devices can receive vehicle location data simultaneously. The number of passengers can be relatively high in situations that require attention by the passengers (e.g., when a ship approaches the port, when a train approaches the station etc., also in emergency situations.)
(g) It is also possible to communicate location data of the object (such as an object located outside the vehicle). There is even no need to let the passenger identify the object. Such an approach might be suitable for emergency situations where the identification of the object (e.g., emergency exit path, rescue boat) is provided by rescue personnel.
(h) Concentrating the calculation (of the navigation path) to the mobile device and limiting the communication between the vehicle location system and the mobile device to unidirectional communication of non-sensitive data (i.e., vehicle location data, and optionally object location data) contributes to data-privacy of the passengers. Technically, the initial in-vehicle location data and the target location data remain within the mobile device.

Further, there is no need to detect movement or non-movement of the vehicle by the mobile device, such information can be communicated from the vehicle location system (that is mounted on the vehicle).

### Brief Description of the Drawings

FIG. 1 illustrates a vehicle on its journey at two consecutive points in time, in combination with a surrounding environment having objects;
FIG. 2 illustrates the vehicle and the environment as represented on a map of a mobile device;
FIG. 3 illustrates the vehicle and the object, with the geographic locations represented by a geographical coordinate system, in combination with the mobile device located inside the vehicle at an in-vehicle location represented in an in-vehicle coordinate system;
FIG. 4 illustrates the vehicle with the mobile device in reference to orientation coordinates;
FIG. 5 illustrates the vehicle in reference to motion of the vehicle;
FIG. 6 illustrates the vehicle (at least partially) with a radio transmitter at the vehicle, and illustrates the mobile device with a receiver;
FIGS. 7A and 7B illustrate implementation details for the mobile device as in use outside the range of the radio transmitter, and as in use inside the range of the radio transmitter;
FIG. 8 illustrates the vehicle with the mobile device during its journey at different points in time;
FIG. 9 illustrates a map that is displayed by the mobile device, at different locations within the vehicle and at different zoom factors;
FIG. 10 illustrates a flowchart diagram of a computer-implemented method; and
FIG. 11 illustrates a diagram that shows an example of a generic computer device and a generic mobile computer device.

### Detailed Description

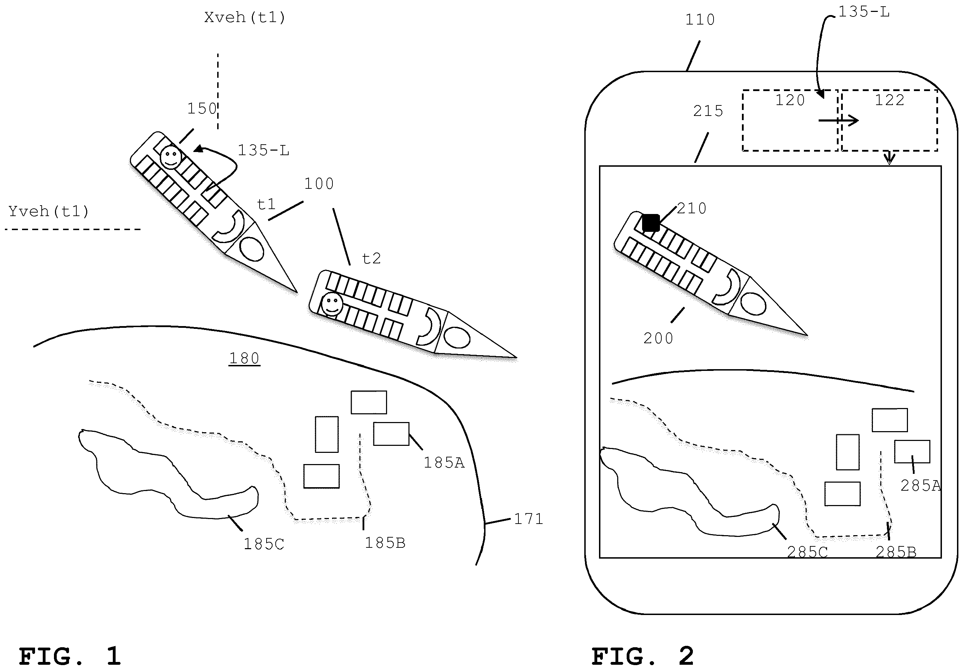

The description introduces a typical scenario in connection with FIGS. 1-2. A mobile device receives vehicle data from a vehicle data system through a transmitter/receiver arrangement. The mobile device provides a representation - such as a map on a display - that accurately represents the location of the vehicle in real-time.

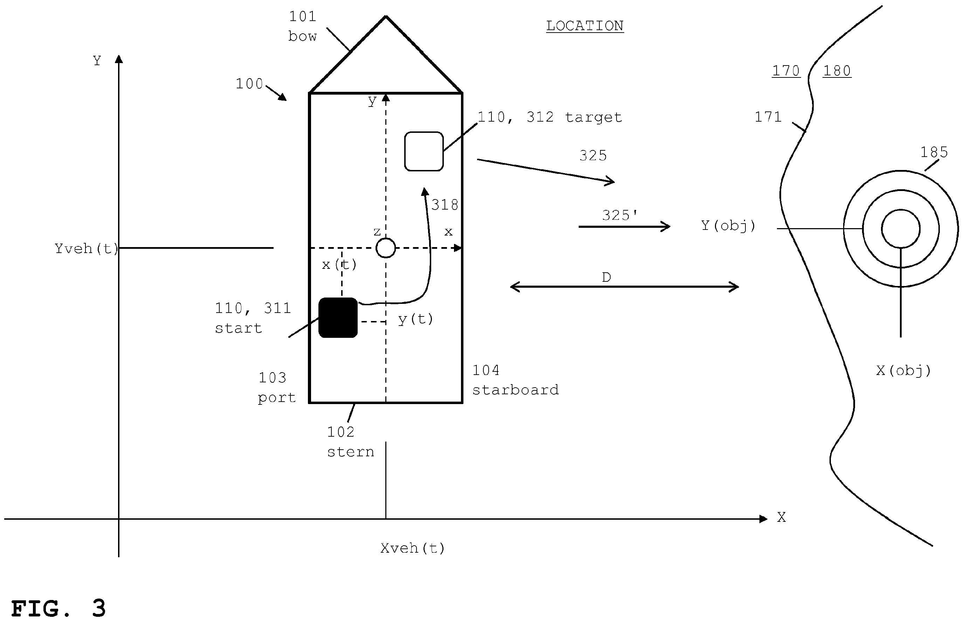

Since the consideration of vehicle movement allows providing maps in seamless zooming between internal and external things (or views), vehicle data and device data will be explained in connection with FIGS. 3-5. Vehicle data and device data have the aspects of location (L), orientation (O) and motion (M):

The term "location" indicates the geographical location of the vehicle at a particular point in time t, with coordinates X(t) and Y(t). For simplicity, the geographical elevation (e.g., meters above mean sea level MAMSL) is not discussed, but could be considered by the person of skill in the art. Details are explained in connection with FIG. 3.

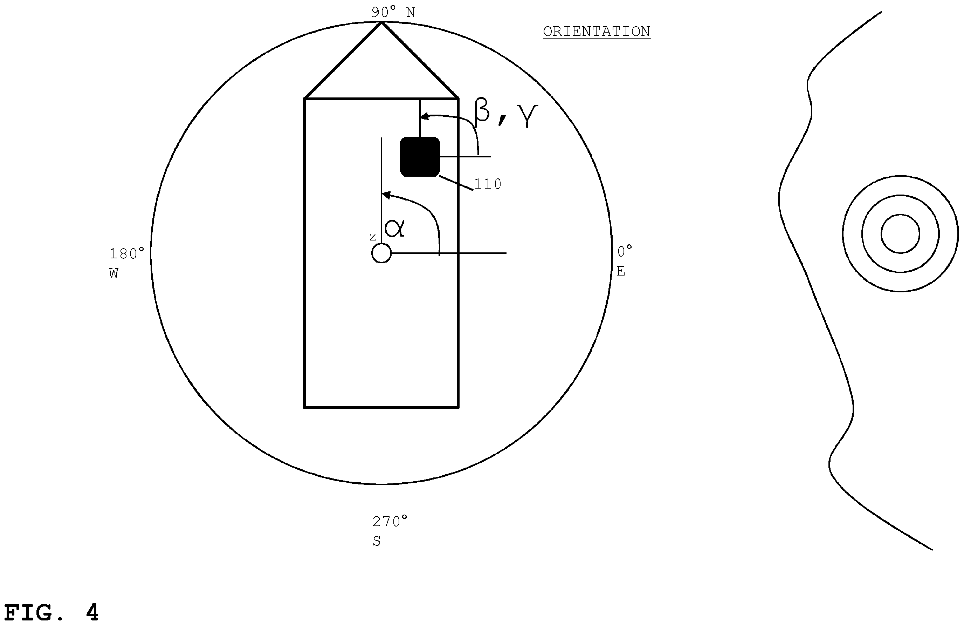

The term "orientation" indicates an actual change of the geographical location (i.e., derivative ΔX/Δt, ΔY/Δt), or indicates a potential change in the standard movement direction of the vehicle. For convenience, the orientation can also be expressed by polar coordinates. Details are explained in connection with FIG. 4.

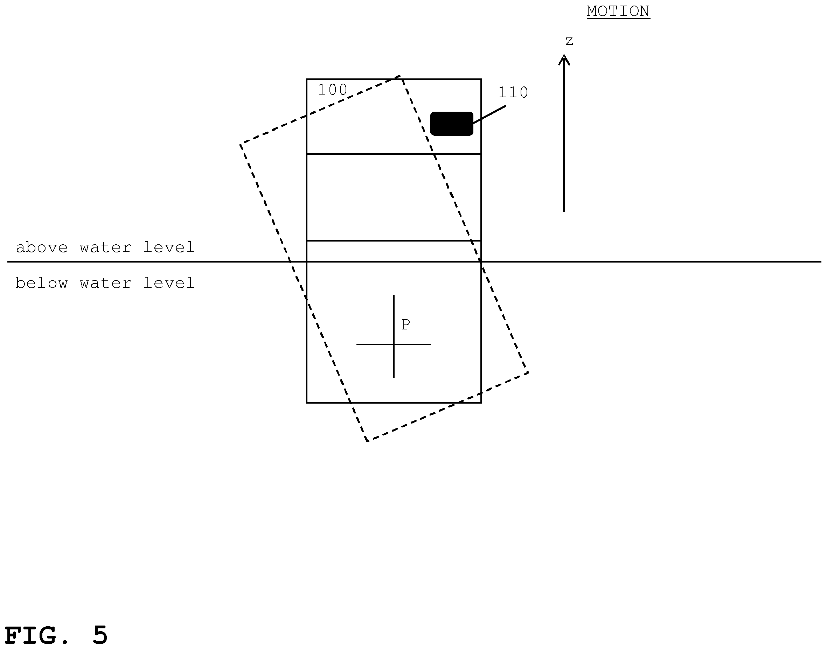

The term "motion" indicates movement of the vehicle but disregards the geographical location (and the change of the location). Details are explained in connection with FIG. 5.

Location, orientation and motion are applicable to mobile devices likewise. The description concentrates on location and orientation of the mobile device.

Location, orientation and motion of the vehicle (and of the device) can be measured (by sensors or other measurement instruments), and computer representations (such as numerical values) are summarized as location data, orientation data, and motion data. In the description, data is sometimes included in brackets []. Hence, there is "vehicle data" (vehicle location data, vehicle orientation data and vehicle motion data), and "device data" (device location data, device orientation data and device motion data). The description sometimes differentiates data by acronyms: L for location data, O for orientation data and M for motion data.

Movement of the vehicle will be differentiated in time by "current" and "future". Current location/orientation/motion refer to the time during that the mobile device is operating, by processing data, by displaying representations etc. as it will be described. Future location/orientation refers to any time in the future during the journey of the vehicle. (There is an assumption that motion can't be anticipated).

Movement of a passenger user (holding the mobile device) will be differentiated in time by "initial" and "target". This implies that the device provides navigation to the user. Likewise there are initial location/orientation/motion and target location/orientation. For simplicity, the description uses the example of navigation inside the vehicle, with target being inside the vehicle. However, the target can also be outside the vehicle (e.g., on a platform for a train).

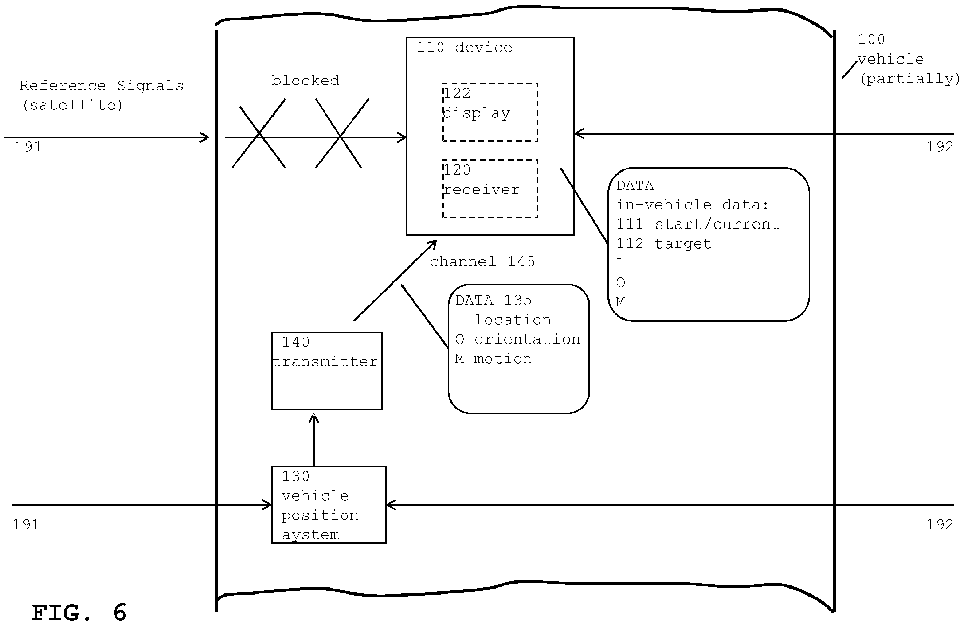

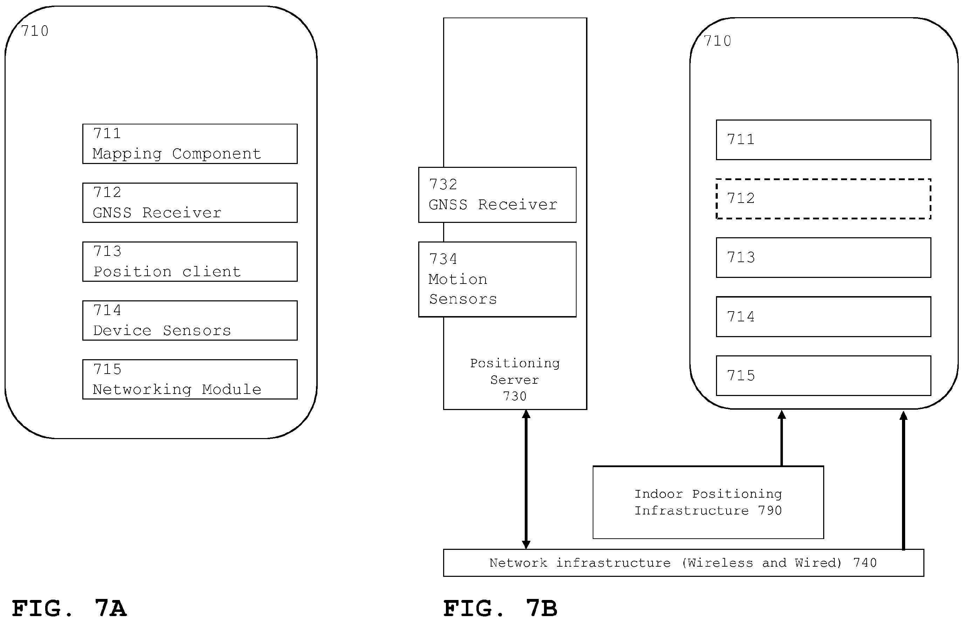

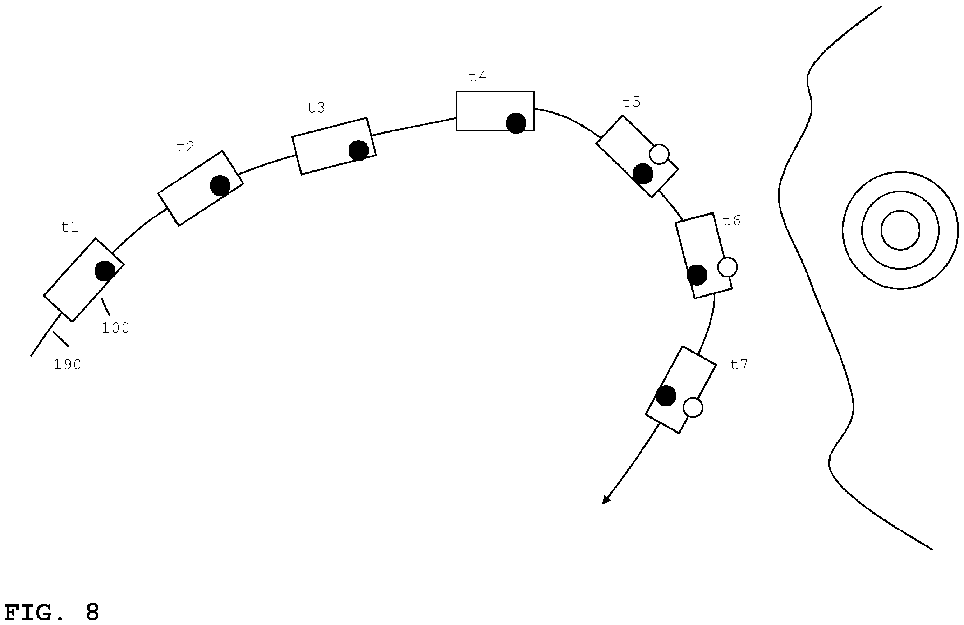

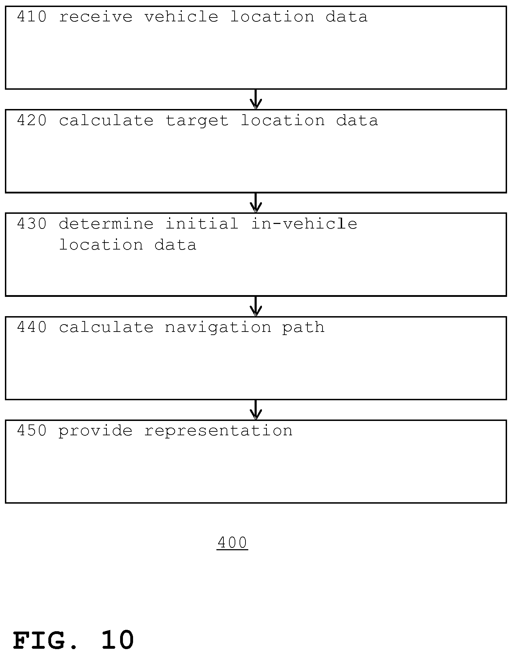

The description will then explain implementation details (FIGS. 6 and 7A, 7B), and will illustrate usage scenarios (FIGS. 8-9). The description will close with discussing a method and a computer system (FIGS. 10-11).

Reference numbers 1xx relate to the vehicle, to the mobile device, to the environment, to data structures and to users, 2xx relate to representations (of vehicle, device, environment) that are presented to a user of the mobile device for example by maps, 3xx relate to coordinates, 4xx to method step, and 7xx, 9xx to computer or other components.

FIG. 1 illustrates vehicle 100 on its journey at two consecutive points in time (t1, t2), in combination with surrounding environment 180 having objects, such as buildings 185A, street 185B, lake 185C (collectively object(s) 185). In the example, the environment is a landscape that is limited by coastline 171 (that divides sea and land). At time point t1, vehicle 100 (in particular its location sensor) is located at Xveh(t1), Yveh(t1). Location data 135-L is being communicated inside vehicle 100 (arrow symbol).

It is well known that a vehicle is a mobile machine that transports people or cargo between geographical locations. Vehicles can be aircraft (such as planes, helicopters), watercraft (such as ships, boats, catamarans), road vehicles (such as cars, automobiles, busses), or rail vehicles (trains, trams). The transportation between the geographical locations is referred to as "journey". In the example of FIG. 1, vehicle 100 is a ship. The description uses the ship example, but the person of skill in the art can apply the teachings herein to other vehicles as well.

Person 150 who is located inside the vehicle changes his/her geographical location together with vehicle 100. The terms "inside" and "on-board" are understood in the sense that the person is physically associated with the vehicle. Such persons are being transported.

In some vehicles, persons can re-locate inside the vehicle, at least for some periods of time during the journey. In the example of FIG. 1, person 150 has changed floor and seat, from a seat inside the ship (first time point t1) to a seat at the upper deck of the ship (second time point t2). In other words, during the journey of the ship, the ship has changed its geographical location and the user has changed his/her in-ship location.

Person 150 can re-locate (from initial location to target location) inside the vehicle by walking through hallways or on stairs, by using escalators or elevators, or otherwise. (Theoretically, the vehicle can comprise smaller vehicles (such as built-in railway systems, or passenger-operated wheel-chairs, but these are disregarded here.)

Although (most of) the persons on board of the vehicle can't influence the geographical location of the vehicle, the re-location inside the vehicle is related to the geographical location and is related to other, external factors. In other words, from the perspective of the vehicle passenger, the external circumstances do matter. But it would be difficult for the passenger to react on them, especially if - on the technical level - information regarding external topics is not properly communicated to the passenger inside the vehicle. Generally, there are many circumstances, among them:
(i) Vehicle 100 and environment 180 can be considered as a transportation system. Connection points (environment to vehicle upon embarking, or vice versa upon disembarking) are system discontinuities (environment/vehicle) that slow down the transportation. Depending on the geographical location, the connection points are located at different locations inside and/or outside the vehicle. However, the connection points may change during the journey. A ship may change its docking approach to the harbor shortly before arrival, a train may use a different arrival track.
(ii) Person 150 relocates inside vehicle 100 at a speed that is different from the vehicle speed. In a worst case, person 150 would have to relocate trough the longest path at the vehicle, but miss the connection point in due time.
(iii) There are situations in that multiple persons need to relocate to/from particular in-vehicle locations within short time through in-vehicle ways that are limited (emergency situations).

From a different perspective, enabling passengers to be on the right place at the right time within the vehicle (by re-locating) involves many technical challenges. Mobile devices - that process location data (of the vehicle and of the person within the vehicle) - can assist person 150 in efficiently re-locating.

Many persons operate mobile devices, i.e. portable devices that let the persons benefit from a number of different functions, among them
- telecommunication (e.g., phone, email, messaging services),
- entertainment (e.g., watching movies),
- navigation (e.g., the indication of an initial location, of a target location, and ways from the initial location to the target location).

There are many other functions for mobile devices. Some of the functions process location, orientation and motion data. However, there are constraints, and the constraints mostly affect the navigation function that uses location data (optionally orientation data).

The navigation function of the mobile devices uses sensors that provide data that represent the location. The mobile device has a location inside the vehicle, and the mobile device has a geographical location (global reference). The sensors can provide further data, such as data representing orientation. The sensors use reference signals (such as signals from satellites, or from beacons), but the reference signals are not always available. The signals can be attenuated by constructional elements of the vehicle (such as by walls) or by objects outside the vehicle (e.g., by large buildings). The accuracy of the position data can depend on the number of reference signals that are received. For example, in case of satellite-based systems, the accuracy rises with the number of satellites from that the sensor receives signals.

In the example of FIG. 1, the passenger user is a ship passenger, but due to the constraints, determining location and orientation data can be complicated. The ship passenger might have moved to the upper deck just to determine the location from an (non-attenuated) satellite signal. But moving (re-locating) inside the ship just to let the device determine the location is not possible all the time. There might be (natural) circumstances that prevent this, such as weather conditions, strong winds etc.

FIG. 2 illustrates mobile device 110 that is adapted for on-board operation in vehicle 100 (cf. FIG. 1). Device 110 has receiver 120 to receive vehicle location data 135-L. Vehicle location data 135-L represents the geographical location (Xveh(t1),Yveh(t1)) of vehicle 100 (at any particular time point, here at t1). Vehicle location data 135-L is being received from vehicle location system 130 that is mounted on vehicle 100 (details in connection with FIG. 6). Display component 122 is adapted to process vehicle location data 135-L in relation to pre-defined geographic data (e.g., from a data base that the mobile device can access) to render a representation 215 with first indication 200 that represents the geographic location of vehicle 100.

As illustrated, representation 215 is a map on the display of mobile device 110. Map 215 can be made visible otherwise (e.g., through a projector).

As illustrated, first indication 200 illustrates a symbol of the vehicle in combination with indication symbols 285A, 285B, 285C (collectively 285) of the environment. The distances on the map correspond to the distances in reality (scaling).

As used herein, a "passenger user" is a person who is being transported by the vehicle and who operates mobile device 110. In that respect, person 150 (cf. FIG. 1) can be regarded as the passenger user. For simplicity of explanation, the passenger user holds the mobile device in his/her hands so that the location of the passenger user and the mobile device are assumed to be identical.

In mobile device 110, receiver 120 receives vehicle location data 135-L from a transmitter on board of the vehicle (e.g., 140 in FIG. 6). Display component 122 is adapted to process vehicle location data 135-L in relation to pre-defined geographic data to render representation 215 with first indication 200 that represents the geographic location of vehicle 100. As in the example of FIG. 2, the ship symbol (i.e. indication 200) is shown relatively to the coastline. Location could also be indicated by coordinates, but the combination of indications 200 (ship) and 285 (environment with objects) is easier for the user to understand.

The description illustrates the representation by maps and the indications by symbols (or by pictures, or otherwise) that belong to the map. The example of the map is illustrative, but more generally, the display component provides a representation of the vehicle and of the geographic location of the vehicle. The person of skill in the art can select other types of representations, among them texts ("Our ship is approaching the coastline from the North").

This approach allows dynamic computation of maps in relation to the outside world or environment. In the example of FIG. 2, the map is illustrated with the environment and with the ship vehicle (both scaled down to the display of the device). The location of the ship on the map corresponds to reality, both in the representations of distances and of timing. There is substantially no delay (between determining location data of the ship and representing the location on the map). In other words, the mobile device provides the map in real-time. The point in time is t1 - the passenger still being inside the ship. Receiving location data from the transmitter allows this accuracy.

As it will be explained below, the accuracy (in space and time) of the received location data (and optionally of further data, such as orientation data and motion data) enables indoor-outdoor mapping that appears seamless to the user.

In view of both FIG. 1 and FIG. 2, there are typical constellations of vehicle, passenger user, device functions, but also of constraints. The description will now introduce three constellations.
Constellation (1): Similar to the example of FIGS. 1-2, the vehicle is a ship that cruises across the sea, the ocean, or along rivers. The passenger user interacts with the mobile device to obtain navigation inside the ship. The navigation target can be a location inside the ship that is related to objects located outside the ship. Navigation comprises that the mobile device shows maps. The maps represent the interior of the ship (such as room, stairways, windows), objects that are located outside the ship (such as landscapes, port areas), or combinations thereof (such as particular windows that allow watching objects that are part of the landscapes). The passenger user can change the scaling representation: the user can zoom into the ship (for example, to see more details, for example, stairs, doors and rooms), can zoom out (for example, to simultaneously see ship details and part of the landscape) and can zoom further out (for example, to see ship and landscape on a geographical map). In a typical situation, the ship passenger user identifies an object that is of interest (e.g., a famous mountain that is located behind the coastline) and let the mobile device indicate a location inside the ship from where the object is visible. In a further typical situation, the ship passenger user identifies the sun (or rather the effects of the sun to the ship or passengers) and let the mobile device indicate a sunny location (or a shadowy location, as the case may be.)
Constellation (2): The vehicle is an aircraft. Except for take-off and landing phases, the air passenger may move inside the aircraft. The mobile device indicates objects of interest (e.g., mountains to watch from the top). However, receiving reference signals from satellites is practically impossible, because the fuselage blocks the waves. There might be other constraints: operating sensors might not be possible for safety reasons (e.g. interference with electronics on board the aircraft).
Constellation (3): The vehicle is a train. The train passenger can walk inside the train, for example to take a seat near a particular car or wagon so that - at the end of the journey - the train passenger can go off the train and arrive at the station without much walking (the first car in the direction of train motion if the train arrives at a terminus station, e.g., at Leipzig Hbf. or at Paris Est). In a further example, the train passenger likes to see a particular mountain. The mobile device offers navigation again at varying scale and granularity, the device should present the maps seamlessly as indoor maps and as outdoor maps, with a transition between "in-vehicle" and "out-of-the-vehicle" that should not be noticed by the user. The train moves fast so that the time interval for watching is relatively short. This issue is even more complicated if there are two or more events, such as (i) moving to a particular side of the train at a particular point in time to see the mountain, (ii) moving to the opposite side to see a particular building, (iii) moving to the car that stops at nearest to the terminus. Smooth interaction is also desired if maps are to be combined (the map representing the train inside and the map representing the station upon arrival, for a particular train car). In order to indicate the suitable time point (and optionally, the left or the right side of the train, or showing the appropriate maps), the mobile device would need to have geographical location data, but the signals from satellites are attenuated.

Shortly returning to FIG. 1, object 185 (ABC) outside the vehicle can be a stationary object. At least during the journey, the object does not change its geographic location, such as in the example with the mountain, the building, or the terminus.

The object outside the vehicle can be a non-stationary, moving object. Examples comprise: other vehicles (travelling at comparable speed). In such situations, there are two moving objects: vehicle 100 (with the passenger) and the object outside. The requirements in view to location accuracy tend to be higher (in comparison to the stationary objects). There is also a requirement to shorten the time for determining the location (and/or orientation, motion), because the "meeting time" for the two objects may be relatively short.

There might be objects that are semi-stationary, such as the sun, the moon (or other celestial objects), but also in this case, movement (absolute, or in relation to the vehicle) has to be taken into account.

The description refers to the example of an object outside the vehicle that the passenger prefers to see (or to watch) as in the example with the mountain, or the building. Or, the passenger has to "step on" the object upon arrival (cf. the train station). This is simplified for illustration.

It is noted that the vehicle and the passenger users (inside the vehicle) are moving at different speeds: travelling speed of the vehicle and re-location speed of the user passenger inside the vehicle (via hallways, stairs, escalators, elevators etc.).

FIG. 3 illustrates vehicle 100 and object 185 with geographic locations that are represented by a geographical coordinate system (X,Y). Mobile device 110 is located inside vehicle 100 at an in-vehicle location that is represented by in-vehicle coordinate system (x,y,z). FIG. 2 is a view-from-above to the earth surface (at the (X,Y) plane). For simplicity, the curvature of the earth is not illustrated. The (X,Y) system is a global reference, such as a coordinate with geographical latitude (Y) and geographical longitude (X).

At time point t, vehicle 100 is located at vehicle location Xveh(t), Yveh(t). At any time, stationary object 185 is located at Xobj, Yobj. Having coordinates for single points is convenient for explanation, the dimension of the vehicle and of the objects are neglected.

At the same time point t, mobile device 110 is located at in-vehicle location x(t), y(t). Optionally, an altitude z can also be defined. The in-vehicle coordinates are illustrated to have their origin at a central location of the vehicle. The person of skill in the art can define other coordinate origins.

Computer data (symbol: []) that represents at least the vehicle location is called vehicle location data [Xveh(t), Yveh(t)]. Likewise there is object location data [Xobj, Yobj] and in-vehicle location data [x(t), y(t)] (cf. 135-L in FIGS. 1, 2 and 6).

In an example, the figure follows the above-mentioned constellation (1): vehicle 100 is a ship that moves in proximity to coastline 171 that separates sea 170 from (dry) land 180. Object 185 is located on land 180. In the example, object 185 is a mountain. It is assumed that the distance D between ship and mountain is short enough to that the passengers can see the mountain. Further assuming ideal weather conditions, the distance D is limited only by the elevation of the mountain and the curvature of the earth.

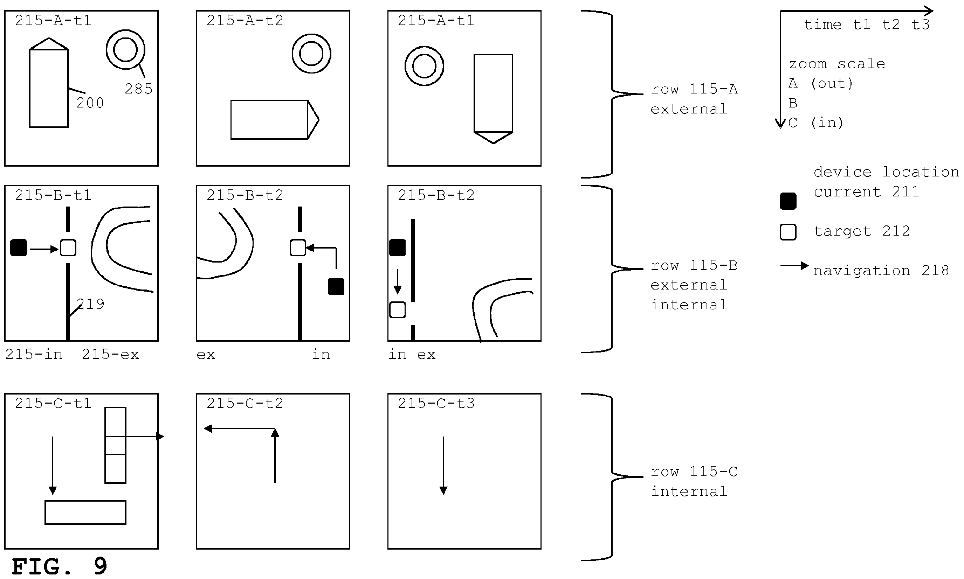

Optionally, the passenger user (with mobile device 110) re-locates inside the vehicle, from an initial in-vehicle location (311, black square symbol) to a target in-vehicle location (312, white square symbols), for example, along path 318. Optionally, mobile device 110 indicates this way to the target location as a navigation path (cf. 218 in FIG. 9).

It is convenient for further explanation to define ship locations by nautical terms: bow 101, stern 102, port 103 and starboard 104.

At the initial in-vehicle location, the passenger user is sitting at the port side without sight to the mountain. At the target in-vehicle location, he/she will be near a window at the starboard side and can watch the mountain. There is a watching direction 325 (i.e., a fictitious line from the mobile device to the mountain). The watching direction can be simplified. In the example, direction 325' goes from WEST to EAST. This leads to the aspect of directions to/from the vehicle, to/from the mobile device and its user, and to/from the objects. This aspect corresponds to the above-mentioned "orientation".

The in-vehicle location x(t), y(t) of the device can be translated from in-vehicle coordinates to geographical coordinates. Data [x(t), y(t)] of the device and data [Xveh(t), Yveh(t)] of the vehicle, if expressed with the geographical reference, would have an offset. The offset can however by neglected for maps at high scales.

FIG. 4 illustrates the vehicle with the mobile device in references to orientation coordinates. Vehicle 100 is oriented according to the direction of travel (cf. the above-mentioned derivative ΔX/Δt, ΔY/Δt). For convenience, the orientation is given with angle α. In the example, vehicle 100 - the ship - is heading North N at α = 90°. Other prominent directions are α = 0° (East E), α = 180° (West W), and α = 270° (South S). In the example, the mountain is located East of the ship.

In-vehicle orientation can also be described for mobile device 110, with β being an angle referring to the (x,y) plane of the vehicle coordinate system (x,y,z), and γ being an angle referring to the geographical coordinate system (X,Y).

FIG. 5 illustrates vehicle 100 in reference to motion. FIG. 5 concentrates on ship motion, showing the ship in side-view (from the stern to the bow). Motion data can represents ship motions of the ship, such as linear motions (sway, surge, and heave), and rotation motions (roll/longitudinal), pitch/lateral, and yaw/vertical). Such motion patterns are well known in the art, including sensors to obtain motion data. The example of FIG. 5 illustrates the so-called roll motion around an imaginary axis P (below water level).

The ship can be a multi-floor passenger ship so that the effect of the motion on mobile device 110 (and the user) depends on the in-vehicle location of the device (in particular in relation to motion axes). Passengers in higher floors will experience different motion than passengers in lower floors. Or, more generally, passengers in proximity to a motion axis will experience less motion (for that axis) than passengers in more distance.

Such a relation can be described by a correction factor (for example, being a relative factor). The correction factor can be communicated - optionally - from the transmitter (correction data).

The description will now explain the benefits of receiving vehicle location data (optionally orientation/motion data).

FIG. 6 illustrates vehicle 100 (at least partially) with a radio transmitter 140, and illustrates mobile device 110 with receiver 120. FIG. 6 also indicates display component 122. Transmitter 140 and receiver 120 are communicatively coupled through in-vehicle radio channel 145, at least in the direction from the transmitter to the receiver. FIG. 6 also illustrates vehicle data system 130 that is mounted on vehicle 100 and that provide vehicle data 135 (e.g., data 135-L, 135-O, 135-M).

Vehicle location system 130 comprises a signal receiver of a global navigation satellite system (GNSS). GNSS provides location data and orientation data. GNSS are will known and available from several providers: NAVSTAR GPS (Global Positioning System) / United States; GLONASS (GLObal NAvigation Satellite System) / Russian Federation; Galileo / European Union; and Beidou / People's Republic of China.

Vehicle data system 130 can be implemented otherwise (for example, in addition to GNSS, by traditional navigation that does not use satellites).

Returning to constellation (1) - vehicle 100 being the ship - vehicle data system 130 is part of a nautical control system. Determining location and orientation of ships is well-established, and can be implemented - at least in a back-up function - without a satellite receiver. Even if the ship officers determine the location manually (according to traditional approaches, such as celestial navigation, or beacon signal observation), location data is available to on-board-computers so that the data can be forwarded.

Transmitter 140 forwards vehicle data 135 in an a data packet with:
ship location data
   [X(t), Y(t)] (data 135-L, cf. FIG. 3)
ship orientation data
   [α(t)] (data 135-O, cf. FIG. 4)
ship motion data
   [sway, surge, heave, roll, pitch, yaw] - optionally (data 135-M, cf. FIG. 5) optionally: correction data (differential data at least for location and orientation with respect to earlier transmissions, and/or according to internal positions of the mobile device within the ship)

Since the data is available in the packet, there is no need for the mobile device to calculate the data from reference signals, or from built-in sensors.

FIG. 6 also illustrates the effect of attenuation compensation. Simplified, there are two reference signals 191, 192 (arrows), such as signals from satellites, or from beacons. Reference signals 191, 192 are partially blocked in the way to mobile device 110. In the example, only the signals 192 from the right side reach the device, the signals from the left side 191 are attenuated (by a wall of vehicle 100). However, vehicle data system 130 can receive all signals 191, 192.

For convenience of explanation it is assumed that transmitter 140 has a transmission range that is sufficient to reach the mobile devices operated by passengers. (There is no need - for example - to reach crew members in the engine compartment of the ship.) Also, transmitter 140 does not have to be implemented as a single unit. The function of transmitter 140 can be integrated into an on-board in-vehicle network such as a WLAN system. In such implementations, radio channel 145 is implemented by the in-vehicle network (e.g., WLAN system).

Further, future locations (and orientations) can be transmitted as well. The person of skill in the art understands that future locations (and orientations) can be derived from trajectory schedules or otherwise.

Optionally, receiver 120 can be adapted to receive correction data. There are at least 3 types of correction data:
(i) Correction data can supplement the location/orientation/motion data that is obtained by the mobile device in situations where attenuation does not block the reference signals. More in detail, the mobile device can determine location/orientation/motion from its own sensors and can use the data to calculate the maps. Such sensors comprise GNSS receivers, compasses, magnetometers, gyroscopes, accelerometers and others. If data is missing (or if the data accuracy is not adequate), the mobile device can also calculate the maps from data that it receives.
(ii) Correction data can be data with calculation instructions that allows adaptive map calculation according to internal positions of the mobile device within the vehicle/ship. For example, a correction factor can be communicated that depends on the distance to a particular motion axis (cf. FIG. 5). Such correction data can be applied to data provided by the mobile device. For example, there are situations where the device is not moving in reference to the ship (e.g., because the user has placed the device on a table). Sensors in the device (e.g., gyroscopes, accelerometers) provide data that indicates motion of the ship, but as the in-ship location of the device is not aligned to the motion axis of the ship (cf. FIG. 5), the data can only be an approximation. Correction data can be used as well to increase accuracy.
(iii) Correction data can be differential data with respect to earlier transmissions. In that sense, the data indicates changes.

FIG. 6 also illustrates in-vehicle data that is available to mobile device 110, for example data that is available at the initial location (location 311 cf. FIG. 3, data 111 being in-vehicle location data, in-vehicle orientation data or in-vehicle motion data), and data that is available for a target location (location 312 cf. FIG. 4, data 112 being in-vehicle location and in-vehicle orientation, but not motion).

FIGS. 7A and 7B illustrate implementation details for mobile device 710 (FIG. 7A) as in use outside the range of transmitter 140, and as in use inside the range of transmitter 140 (FIG. 7B). Simplified, the mobile device can be located inside the vehicle (cf. FIG. 7A) or outside the vehicle (cf. FIG. 7B).

As in FIG. 7A, mobile device 110 comprises mapping component 711, GNSS receiver 712, position client 713, device sensors 714, and networking module 715.

Mapping component 711 and position client 713 in combination correspond to above-explained display component 122; and networking module 715 is part of receiver 120. Outside the range of the transmitter, receiver 120 can operate in a standby mode in the sense that module 715 is scanning the frequency ranges of radio channel 145 until it receives signals (data 135, from FIG. 6).

GNSS receiver 712 is provided optionally to determine location/orientation data (X,Y,α) by receiving GNSS signals (cf. signals 191, 192 in FIG. 6). Device sensors 714 are provided optionally to determine motion data, and to assist in determining in-vehicle location/orientation data (x, y, z). For example, sensors 714 can sense the presence/absence/strength of radio signal from beacons (that are located inside the vehicle), sensors 714 can measure the acceleration so that mobile device 700 can calculate the in-vehicle location/orientation as the passenger user moves within the vehicle.

Many modern mobile devices do have such components.

Outside the range of transmitter 140 (cf. FIG. 6), mobile device 710 has to rely on GNSS receiver 712 (and on sensors 714).

As in FIG. 7B, mobile device 110 is now inside the range of transmitter 140 (i.e. network 740). As explained above, the location corresponds to an on-board location (or in-vehicle location). The vehicle optionally has a dedicated indoor positioning infrastructure 790 (with beacons or the like) so that device 710 can use sensors 714.

Vehicle has a network infrastructure 740. In embodiments, infrastructure 740 can be a wireless infrastructure that implements transmitter 140. Persons of skill in the art can select suitable transmission protocols (e.g., WLAN).

Positioning server 730 is installed on the vehicle, and comprises GNSS receiver 732. Positioning server 730 can partly use system 130, but further comprises components to encode data. For some types of vehicle (e.g., ship or aircraft), positioning server 730 has motion sensors 714 (cf. the above-introduced ship motion).

The component 711, 712, 713, 714 and 715 of mobile device 710 remain available, but GNSS receiver 712 can be deactivated. In other words, outside the range (FIG. 7A), the mobile device relies on its own GNSS receiver, inside the range (FIG. 7B), the mobile device relies on its capability to receive data 135 (cf. FIG. 6) by its networking module 715.

Off-the-shelf devices have components 711, 712, 713, 714 and 715 available at least by hardware, but the computer programs add the functionality that is being described.

FIG. 8 illustrates the vehicle with the mobile device during its journey at different points in time. Again assuming the vehicle being the ship, the ship travels a curve in a trajectory 190 from West to East (t1, t2, t3, t4), and in the visual proximity of the mountain as the ship turns South (t5, t6, t7).

The black circle symbols (within the ship) illustrate the mobile device and its passenger user, sitting near a window at the starboard side (104 in FIG. 3). The passenger user would have difficulties to watch the mountain. Potentially, he/she would have to lean out of the window (t1 to t4) to see the mountain in far distance; when the ship approximates the mountain (t5 to t7) there is no visibility.

The white symbols indicate an alternative scenario. The mobile device identifies its location coordinates and its orientation coordinates. Identifying the coordinates - that is collecting location data and orientation data - can be accomplished via transmitter 140/receiver 120 (X,Y, α), and via in-vehicle sensors (x,y,β/γ).

Approximately from t4, the mobile device suggests (by showing maps) to change seats (from a starboard seat to a port seat, from 104 to 103 cf. FIG. 3). There is no need to confront the user with nautical terms, a map with navigation through the various doors, stairs and other ways inside the ship is more convenient.

To calculate the map, the mobile device needs to have exact location (and orientation) data of (i) the ship, (ii) the mountain (e.g., from the data base), and (ii) its in-vehicle position. As explained above, at least obtaining the ship location can be technically impossible, or in-accurate, for example due to the attenuation of the reference signals. As explained, the attenuation effects can be mitigated, during the journey, as the mobile device receives data from in-ship transmitter 140 at regular intervals. The intervals can correspond to the time intervals between t1, t2 etc., but it is more convenient to have shorter intervals (e.g., to transmit data every second).

Optionally, the mobile device receives location/orientation data that are expected location data for the future. For example, at t4 (FIG. 8), the turn to South is known.

Optionally, the mobile device receives an identification of object 185 (as being of interest) through transmitter 140/receiver 120. This is convenient for objects that are not represented in the data base (that the mobile device can access).

More in general, FIG. 8 also illustrates that events for the passengers can be planned in advance. The passenger can re-locate to a desired in-vehicle location and timely arrive at a particular time, from any place within the vehicle. From the perspective of the operators, dealing with multiple passengers can be improved (simplified lining up, waiting times minimized), and the use of the re-location ways by passengers within the vehicle can be optimized. For example, passengers can be loaded to elevators more equally.

FIG. 9 illustrates maps 215-A-t1 ... 215-C-t3 that are displayed by the mobile device, at different points in time (e.g., t1, t2 and t3) and with different zoom factors (e.g., A, B, C). In the mobile device, the display component can be adapted to render the representation as a map and to interact with the user to receive a zoom factor and to render the map depending on the zoom factor.

Modern mobile devices usually have interface elements such as touch screens or other user interface elements that allow the user to interact with the device to receive the zoom factor. The term "zoom factor" summarizes that maps can be displayed with different scaling. For simplicity, the figure concentrates on situations with a moving vehicle and an external, stationary object. In the example, the vehicle is a ship and the object is a mountain. The maps show the (X,Y) and (x,y) planes (cf. FIG. 3), but the principles are applicable to the other planes (Y,Z), (X,Z) and (y,z), (x,z) as well.

The example of FIG. 9 illustrates maps in a matrix with different zoom factors (A = zoom out; B; C = zoom in) in rows 215-A, 215-B and 215-C. The scaling can be applied to the ship, the mountain and the distances on the sea likewise, or differently.

Although the figure illustrates three zoom factors only, maps could be contemplated that present the surface of the earth with dot symbols for the ship and for the mountain (not scaled to the earth). The maps could continue with a simplified symbolic representation 200 of the ship and of the mountain 285 as in row 215-A, could continue with showing the ship partially (the bold line for a wall) in combination with more details for the mountain as in row 215-B, and could end with details for the above-mentioned stairs, doors and rooms 215-C.

The map can have a first (or external) portion 215-ex that indicates the geographic location (of vehicle 100). In the example, the external portion is shown partially in the zoom-out row 215-A, and in row 215-B. An internal-external border can be defined by symbolic representation 219 of the ship wall. It is noted that the ship will is not the same in all maps: starboard side in 215-B-t1, port side in 215-B-2 etc. The geographic location can be indicated relative to the external object (as in the figure), relative to a coordinate system (X,Y) as in FIG. 3 or otherwise.

The map can have a second (internal) portion 215-in that indicates the in-vehicle location of the device. This corresponds to the in-vehicle location of the passenger user. In the example the device is symbolized by a black square. The internal portion is shown partially in row 215-B1, and in zoom-in row 215-C.

Both portions - the external and the internal portions - can be combined, as illustrated in row 215-B.

The display component (i.e. 120) can be adapted to provide the first portions with a further indication 285 of the object that is located outside the vehicle. In the example, further indication 285 is the symbol of the mountain (concentric circles, as in row 215-A) or the cartographic representation of the mountain (elevation lines), as in row 215-B.

Looking at the different point in time (t1, t2, t3), the maps (at least the maps with external portions) illustrate the ship moving in relation to the mountain (starboard side at t1, port side at t2, and again starboard at t3).

The display component can be adapted to provide in-vehicle navigation (or "indoor navigation", from initial location 211/311) to target in-vehicle location 212/312 that is a pre-determined relation to an external object. In-vehicle navigation indicates a potential physical movement of the user (with the mobile device) from an initial location (inside the vehicle, at the particular point in time such as t1, t2 or t3) to a particular target location (inside the vehicle).

The ship example of FIG. 9, the in-ship navigation is illustrated by the mentioned black squares (standing for the initial location(s)) and white squares (standing for the target location(s)), and by arrows directed to the white squares (standing for the navigation path). In-ship navigation is applicable in connection with maps that illustrate the internal portions (as in rows 215-B and 215-C). The person of skill in the art can implement the display portion to activate/de-activate this navigation depending on the zoom factor (this approach saving computation resources).

The target in-vehicle location (cf. the white squares) is a pre-determined relation to the external object. There are at least two aspects: (i) a pre-definition of the relation, and (ii) the calculation of the target in-vehicle location in real-time (i.e. during the movement of the vehicle)

In the example, the relation corresponds to the existence of a watching direction (i.e. object visibility) from the vehicle/ship to the object/mountain, cf. direction 325 in FIG. 3. In other words, the object is visible from vehicle, depending on the vehicle location. Since the vehicle has a physical extension (and has sight-preventing obstacles such as wells, or sight-enabling equipment such as windows), not all locations on the vehicle/ship are suitable as a target locations. In other words, even if the user inspects the maps at zoom-out (row 215-A), he/she can't simply walk to the suitable side (of potential target location). Windows etc. might not be available everywhere on the ship. This is not a concern because the mobile device assists the user with in-vehicle navigation (that considers external circumstances as well as internal circumstances).

In a first step, the display unit calculates potential target locations by processing geographical coordinates (for example, data 135, including vehicle/ship location, or data base with object location, for example in (X,Y) coordinates, optionally with data regarding structural features of the vehicle/ship). In the example, potential target locations are at the windows at starboard (at t1, cf. 215-B-t1 the gap in wall symbol 219).

In a second step - that is optional - the display component processes the initial in-vehicle (in-ship) location of the device in comparison to the potential target locations to identify the in-vehicle target location. In the example of map 215-B-t1, the device (black squares) is not yet located at a starboard window, but a target location (white square) is identified (and displayed to the user).

In a third step - this is optional as well - the display component provides a navigation path (318 in FIG. 3, arrow symbol 218 in FIG. 9). Indoor navigation is well known in the art so that the person of skill in the art can implement this.

However, the calculated navigation path does not remain valid forever. As the ship is moving (changing location, orientation) relative to the object, the target location can change.

As the vehicle/ship moves, the calculation are repeated (this can be triggered by new data 135 being received at the receiver). It is noted that depending on the zoom factor, the calculation can be adapted accordingly. For example, in case of zoom-out (row 215-A), calculating the target location can be avoided. As soon as the user selects a zoom-factor that leads to internal maps, calculating the target location (and the navigation) can begin. If the user selects the in-zoom factor (cf. row 215-C), calculating the navigation path can be modified to consider more details (e.g., considering particular stairs, doors and rooms), but at relatively higher resource consumption (at the mobile device).

The example of the object visibility as the pre-definition of the relation is an illustrative example. There could be other motivations. The above-mentioned sun/shadow scenario can have implication as to the health of the user (who is potentially exposed to sun radiation). The external object could be an object that might have caused some harm to the passenger users, such a direction of strong wind or a potential air pollution from an industrial site. The object is therefore a not-to-watch object.

Considering the progress of time is possible as well (cf. FIG. 8, guide the user to re-locate even if the mountain is not yet visible). In the example of map 215-B-t1, the map navigates the user to a starboard window. Since passengers need time to re-locate inside the vehicle/ship, this intra-vehicle relocation time can be considered as an additional parameter. Instead, a port side window could be offered as an alternative target location if the ship is about to move accordingly.

The description of FIG. 9 concentrates on location data, but orientation data can be processed as well (cf. the orientation of the ship in row 215-A, the navigation path that includes orientation information etc.). It is also possible to process motion data: if the ship is in motion, the maps can be adapted in real-time.

The person of skill in the art can adapt the approach for the other constellations accordingly. In case (3), the target location could even be located outside the train, so that the passenger is guided first to take a seat at a particular car (i.e. being an intermediate target location) and then to move inside the arrival station to reach a final target location. In that respect, the external object (station platform) is considered non-stationary because the arrival platform can be changed on short notice.

FIG. 10 illustrates a flowchart diagram of computer-implemented method 400 to operate a mobile device on a vehicle to provide navigation. Method 400 is performed by mobile device 110. The navigation is from an initial in-vehicle location (cf. 311 in FIG. 3) of mobile device 110 to target location (cf. 312 in FIG. 3) of the mobile device (110). The target location is a location in a pre-determined relation to an object (cf. 185) that is located outside the vehicle.

As it has been explained in connection with the ship example (constellation (1)), the target location can be in-vehicle location (i.e. inside the vehicle). Target locations can also be outside the vehicle (cf. constellation (3) with a target location being a particular platform). In such cases, the navigation will comprise an intermediate position where the vehicle has an exit (cf. constellation (3) the door that will open when the train arrives).

In receiving step 410, the device receives vehicle location data (135-L) that represent a geographical location (such as Xveh, Yveh) of vehicle 100. The device receives the data from vehicle data system 130. System 130 is mounted on the vehicle 100 (cf. FIGS. 6-7).

In calculating step 420, the device calculates target location data (cf. 112 in FIG. 6) by processing the vehicle location data (135-L) and location data (Xobj, Yobj) of object 185. The location data of object 185 can be predefined, for example stored in a database (the mobile device has access it), or can be communicated to the mobile device from the vehicle.

In determining step 430, the mobile device determines initial in-vehicle location data (111-L, indoor navigation, cf. FIGS. 7A, 7B) of mobile device 110. This can be accomplished by using the built-in sensors of mobile device 110. Using indoor positioning infrastructure (790 in FIG. 7B) and using correction data is optional.

In calculating step 440, the device calculates an in-vehicle navigation path (318 in FIG. 3, represented as 218 on the map) from the initial in-vehicle location (311) to the target location (312). Thereby, the device uses initial in-vehicle location data 111 and target location data 112. It is noted that performing the calculation by the mobile device (but not by a computer located at the vehicle), the communication between vehicle and mobile device can be limited to the vehicle location data. This approach saves bandwidth. Bandwidth might become limited resource in situations when many passengers query their devices for navigation (cf. the example of the above-mentioned situation for port/station approaching, emergencies etc.).

In providing step 450, the device provides visual representation 215 of the navigation path 218 on a map, and/or of target location 212.

Optionally, the device processes orientation data, as follows: In receiving step 410, the device can receive vehicle orientation data 135-O (that represent an orientation α of vehicle 100), from vehicle data system 130. In calculating step 420, the device can calculate target orientation data 112-O by processing vehicle orientation data 135-O. In determining step 430, the device can determine initial in-vehicle orientation data 111 of mobile device 110. In calculating step 440, the device can calculate the in-vehicle navigation path by using initial in-vehicle orientation data 111 and the target orientation data 112. In providing step 450, the device can provide visual representation 215 of the navigation path with a target orientation of mobile device 110.

As already explained for FIGS. 1-9, there are more aspects. The description now repeats some of them for FIG. 10. It is noted that the activities of mobile device 110 can be considered as part of the method step as well.

In step providing 450, the mobile device can provide the visual representation (cf. map 215) of navigation path 218 with portions that are based on different coordinate systems, being external portion 215-ex (representing vehicle 110 by indicating the geographic location of vehicle 100), and being internal portion 215-in (representing vehicle 110 inside, by indicating the in-vehicle location of mobile device 110). Data for internal portion 215-in is related to at least one point of vehicle 110, and data for the external portion is vehicle location data 135-L for the same point of the vehicle. In other words, the point is a coordinate connector. Other connectors can be used as well, for example, to orient both system into a common direction.

In step providing 450, mobile device 110 can provide the map as a combination of the internal portion and the external portion and can enable zooming (between the portions).

In step providing 450, mobile device 110 can interacts with user 150 to receive a zoom factor. Depending on the zoom factor, mobile device 110 renders the map with internal portion 215-in, with external portion 215-ex, or with a combination of portions 215-ex and 215-in. Having exact vehicle location data (Xveh, Yveh), in real-time is advantageous.

In step providing 450, mobile device 110 can provide external portion 215-ex with an indication of object 185 (i.e. by a symbol on the map).
In step receiving 410 vehicle location data 135-L, mobile device 110 can further receive location data of object 185, so that in step calculating 420 target location data 112, mobile device 110 can use the received location data of the object 185. This approach accommodates changes of the object and/or of the relation between vehicle 100 and object 185.

Vehicle location data 135-L and object location data Xobj, Yobj can be data with applicability to a particular point in time (cf. FIG. 8, t5, t6, t7) in the future to calculate 420 target location data 112 with applicability to that particular point in time (t5, t6, t7).

Regarding the above-mentioned accuracy constraints, performing the calculations at a single computer (i.e., at the mobile device) can be advantageous, in providing accuracy of the maps. To further illustrate this, providing maps requires calculations with different data as input (such as the mentioned data sets for relocation ways, data set for rendering, location data etc.), and using two coordinate systems (internal, external) potentially introduces non-continuities (between maps), but the mobile device using data as described can provide accurate navigation paths.

FIG. 10 also illustrates a computer program or a computer program product. The computer program product - when loaded into a memory of a computer and being executed by at least one processor of the computer - performs the steps of the computer-implemented method. So in other words, the blocks in FIG. 10 illustrate that the method can be implemented by a computer under the control of the program.

The description referred to mobile device 110. The persons of skill in the art can apply the teachings herein to devices that are installed inside the vehicle at relatively stationary in-vehicle positions. For example, information terminals or public screens, web terminals can provide similar functionality. Interaction with the user is also possible, for example, though gesture controls.

There is no need that the device (mobile or stationary) comprises its own GNSS-receiver.

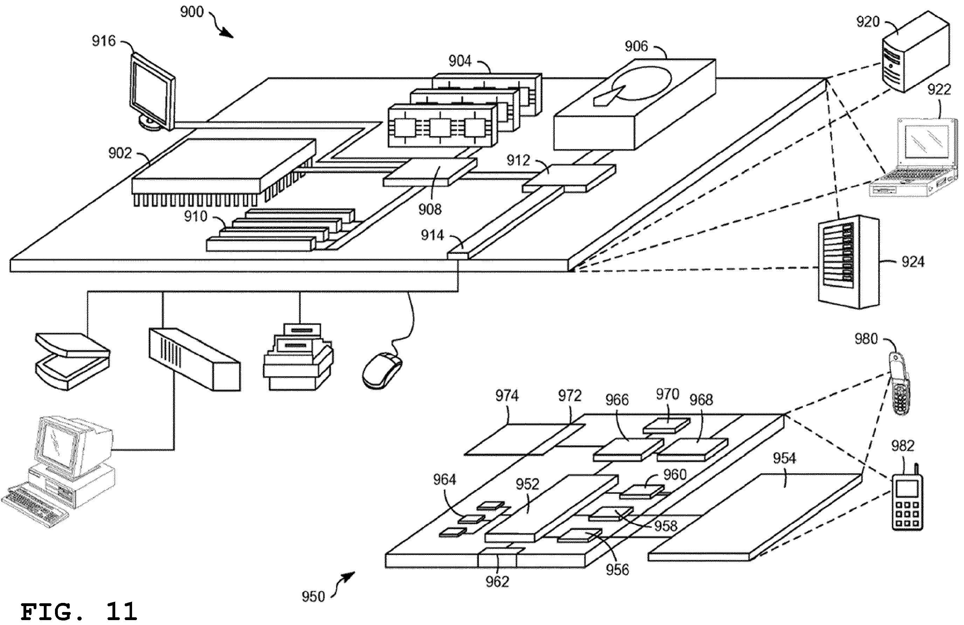

FIG. 11 illustrates a diagram that shows an example of a generic computer device and a generic mobile computer device, which may be used with the techniques described herein. Embodiments of the invention can be implemented in digital electronic circuitry, or in computer hardware, firmware, software, or in combinations of them. The invention can be implemented as a computer program product, for example, a computer program tangibly embodied in an information carrier, for example, in a machine-readable storage device, for execution by, or to control the operation of, data processing apparatus, for example, a programmable processor, a computer, or multiple computers. A computer program as claimed can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network. The described methods can all be executed by corresponding computer products on the respective devices, for example, the first and second computers, the trusted computers and the communication means.

Method steps of the invention can be performed by one or more programmable processors executing a computer program to perform functions of the invention by operating on input data and generating output. Method steps can also be performed by, and apparatus of the invention can be implemented as, special purpose logic circuitry, for example, a field programmable gate array (FPGA) or an application-specific integrated circuit (ASIC).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, for example, magnetic, magneto-optical disks, optical disks or solid state disks. Such storage means may also provisioned on demand and be accessible through the Internet (e.g., Cloud Computing). Information carriers suitable for embodying computer program instructions and data include all forms of non-volatile memory, including by way of example semiconductor memory devices, for example, EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, for example, a cathode ray tube (CRT) or liquid crystal display (LCD) monitor, for displaying information to the user and an input device such as a keyboard, touchscreen or touchpad, a pointing device, for example, a mouse or a trackball, by which the user can provide input to the computer. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input.

The invention can be implemented in a computing system that includes a back-end component, for example, as a data server, or that includes a middleware component, for example, an application server, or that includes a front-end component, for example, a client computer having a graphical user interface or a Web browser through which a user can interact with an implementation of the invention, or any combination of such back-end, middleware, or front-end components. Client computers can also be mobile devices, such as smartphones, tablet PCs or any other handheld or wearable computing device. The components of the system can be interconnected by any form or medium of digital data communication, for example, a communication network. Examples of communication networks include a local area network (LAN) and a wide area network (WAN), for example, the Internet or wireless LAN or telecommunication networks.

The computing system can include clients and servers. A client and a server are generally remote from each other and typically interact through a communication network. The relationship of client and server arises by virtue of computer programs running on the respective computers and having a client-server relationship to each other.

## Claims

1. Computer-implemented method (400) to operate a mobile device (110) on a vehicle (100) to provide navigation from an initial in-vehicle location (311) of the mobile device (110) to a target location (312) of the mobile device (110), wherein the target location (312) is a location in a pre-determined relation to an object (185), with the object (185) being located outside the vehicle (100), the method (400) comprising:
receiving (410) vehicle location data (135-L) that represent a geographical location (Xveh, Yveh) of the vehicle (100) from a vehicle location system (130) that is mounted on the vehicle (100);
calculating (420) target location data (112) by processing the vehicle location data (135-L) and location data of the object (185, Xobj, Yobj);
determining (430) initial in-vehicle location data (111-L) of the mobile device (110);
calculating (440) an in-vehicle navigation path (318, 218) from the initial in-vehicle location (311) to the target location (312) by using the initial in-vehicle location data (111) and the target location data (112); and
providing (450) a visual representation (215) of the navigation path (218) by a map (215) on a display component (122) of the mobile device (110).

2. The method (400) according to claim 1, **characterized in that**:
- the receiving step (410) comprises to receive vehicle orientation data (135-O) that represent an orientation (α) of the vehicle (100) from the vehicle data system (130);
- the calculating step (420) comprises to calculate target orientation data (112-O) by processing the vehicle orientation data (135-O);
- the determining step (430) comprises to determine initial in-vehicle orientation data (111) of the mobile device (110);
- the calculating step (440) comprises to calculate the in-vehicle navigation path by using the initial in-vehicle orientation data (111) and the target orientation data (112); and
- the providing step (450) comprises to provide the visual representation (215) of the navigation path with a target orientation of the mobile device (110).

3. The method (400) according to any of claims 1-2, wherein receiving (410) vehicle location data (135-L) that represent a geographical location (Xveh, Yveh) relates to vehicle location data that is applicable for a point in time in the future.

4. The method (400) according to any of the preceding claims, wherein in step providing (450) the visual representation (215) of the navigation path (218), the mobile device (110) provides the map (215) with portions that are based on different coordinate systems, being an external portion (215-ex) representing the vehicle (110) by indicating the geographic location of the vehicle (100), and being an internal portion (215-in) representing the vehicle (110) inside by indicating the in-vehicle location of the mobile device (110), wherein data for the internal portion (215-in) is related to at least one point of the vehicle (110), and wherein data for the external portion is the vehicle location data (135-L) for the same at least one point of the vehicle.

5. The method (400) according to claim 4, wherein in the step providing (450), the mobile device (110) provides the map as a combination of the internal portion and the external portion and wherein zooming is enabled between and across the portions.

6. The method (400) according to claim 4, wherein in the step providing (450), the mobile device (110) interacts with a user (150) to receive a zoom factor and - depending on the zoom factor - to render the map with the internal portion (215-in); with the external portion (215-ex); or with a combination of the external portion (215-ex) and the internal portion (215-in).

7. The method (400) according to claim 6, wherein in the step providing (450), the mobile device (110) provides the external portion (215-ex) with an indication of the object (185).

8. The method (400) according to claim 7, wherein in step receiving (410) vehicle location data (135-L), the mobile device (110) also receives the location data of the object (185), in step calculating (420) target location data (112), the mobile device (110) uses the received location data of the object (185).

9. The method (400) according to any of the preceding claims, wherein the vehicle location data (135-L) and the object location data (Xobj, Yobj) is data with applicability to a particular point in time (t5, t6, t7) in the future to calculate (420) target location data (112) with applicability to that particular point in time (t5, t6, t7).

10. A computer program product that, when loaded into a memory of a computer and being executed by at least one processor of the computer, performs the steps of the computer-implemented method according to any of claims 1-9.

11. Mobile device (110) with processor, memory and display, having modules that are adapted by computer-instructions to perform the steps of a method according to any of claims 1-10.

12. The mobile device (110) according to claim 11, wherein the modules are adapted by computer-instructions received through a communication module.
